# EUROPÄISCHE PATENTANMELDUNG

(11) **EP 2 270 757 A1**
(43) Veröffentlichungstag der Anmeldung: **05.01.2011**
(21) Anmeldenummer: 10006407.0
(22) Anmeldetag: 21.06.2010
(51) Int. Cl.: G07F 7/06, G06Q 50/00

(54) **Identifikationsmerkmal**

(30) Priorität: 22.06.2009 AT 9562009
(71) Anmelder: BDC - EDV Consulting GmbH, 1020 Wien (AT)
(72) Erfinder: Biely Helmut Dipl. Ing., 3411 Weidling (AT)
(74) Vertreter: Grabherr, Claudia

(57) **Zusammenfassung**

Verfahren und Chipkarte (1) zur Erzeugung eines anwendungsbereichsspezifischen Identifikationsmerkmals zur Identifikation einer Person gegenüber einer auffordernden Stelle (3), wobei die Chipkarte (1) eine Betriebssystemerweiterung umfasst, die aus dem darauf gespeicherten und vor unberechtigtem Zugriff geschütztem Identifikationsmerkmal (4) und einer Kennung eines Anwendungsbereichs (5) der auffordernden Stelle (3) ein anwendungsbereichsspezifisches ldentifikationsmerkmal errechnet.

## Beschreibung

Die Erfindung betrifft ein Verfahren zur Erzeugung eines anwendungsbereichsspezifischen Identifikationsmerkmals zur Identifikation einer Person gegenüber einer auffordernden Stelle aus einem auf einer Chipkarte gespeicherten und vor unberechtigtem Zugriff geschützten Identifikationsmerkmal mit Hilfe einer Anwendung und einer Kennung eines Anwendungsbereiches der auffordernden Stelle sowie eine Chipkarte zur Durchführung des Verfahrens.

Im Zuge von elektronischen Verfahren zwischen natürlichen Personen und Behörden oder privatwirtschaftlichen Auftraggebern kommen Chipkarten, in Österreich sogenannte Bürgerkarten, zum Einsatz, welche eine Personenbindung enthalten. Es handelt sich hierbei um eine Datenstruktur, die zur eindeutigen Identifikation der Person gegenüber der Behörde oder der privatwirtschaftlichen Stelle dient. Als eindeutiges Identifikationsmerkmal der Person dient eine bestimmte Zahl, in Österreich die sogenannte Stammzahl, die ein Element der Personenbindung ist.

Die Stammzahl darf aus datenschutzrechtlichen Gründen keinesfalls als ldentitätsmerkmal von den beteiligten Behörden gespeichert werden. Aus diesem Grund werden von den Behörden sogenannte bereichspezifische Personenkennzeichen herangezogen. Diese werden aus der Stammzahl der betroffenen natürlichen Person und einer Kennung für den jeweiligen Verfahrensbereich abgeleitet. Es handelt sich bei dieser Ableitung um eine kryptographische Einwegableitung, die nicht umkehrbar ist. Das bedeutet, dass aus dem bereichspezifischen Personenkennzeichen nicht auf die Stammzahl der natürlichen Person rückgeschlossen werden kann. Genauso wenig kann aus einer vorhandenen Ableitung eine Ableitung für einen anderen Bereich bestimmt werden.

Bei der Ableitung des bereichsspezifischen Personenkennzeichens wird in einem ersten Schritt aus der Stammzahl und dem Verfahrensbereich eine Zeichenkette gebildet. Aus dieser Zeichenkette wird unter Anwendung eines Hash-Algorithmus eine sichere kryptographische Einwegableitung berechnet.

Die beschriebene Ableitung wird üblicherweise von der Behörde durchgeführt. Das Problem bei dieser Vorgangsweise ist, dass die Person darauf vertrauen muss, dass die Behörde die datenschutzrechtlichen Vorschriften einhält und die übermittelte Stammzahl nicht dauerhaft speichert.

Abgesehen von Verfahren gegenüber Behörden sind ebenfalls Verfahren zwischen natürlichen Personen und privatwirtschaftlichen Auftraggebern zulässig. An Stelle der Kennung des Verfahrensbereichs tritt in diesem Fall die Stammzahl des privaten Auftraggebers, z.B. bei Unternehmen die Firmenbuchnummer des Unternehmens. Das abgeleitete Personenkennzeichen wird als wirtschaftsbereichsspezifisches Personenkennzeichen bezeichnet. Im Unterschied zum behördlichen Verfahren sieht hier der österreichische Gesetzgeber vor, dass die Ableitung des wirtschaftsbereichsspezifischen Personenkennzeichens bereits durch die Bürgerkartenümgebung erfolgt. Eine Übermittlung der Stammzahl an den Auftraggeber des privaten Bereichs erfolgt nicht. Dennoch muss die Stammzahl von der Bürgerkarte in die Bürgerkartenumgebung übermittelt werden bzw. einem Anwendungsprogramm übermittelt werden. Dies stellt ein beträchtliches Sicherheitsrisiko dar.

Aufgabe der vorliegenden Erfindung ist es, diesem Sicherheitsrisiko zu begegnen und ein sichereres Verfahren und eine Chipkarte dafür zu schaffen. Diese Aufgabe wird erfindungsgemäß dadurch gelöst, dass bei dem eingangs beschriebenen Verfahren die anfordernde Stelle der Anwendung die Kennung des Anwendungsbereichs zur Verfügung stellt, die Anwendung der Chipkarte ein Kommando zur Ableitung des anwendungsbereichsspezifischen Identifikationsmerkmals und die Kennung des Anwendungsbereichs übermittelt, in der Chipkarte die Ableitung des anwendungsbereichsspezifischen Identifikationsmerkmals durchgeführt wird, indem das Identifikationsmerkmal mit der Kennung des Anwendungsbereichs verknüpft und darauf eine kryptographische Einwegfunktion angewandt wird, das resultierende Kryptogramm an die Anwendung übertragen wird, die Anwendung das Kryptogramm direkt oder nach Aufbereitung als Datenpaket als anwendungsbereichsspezifisches Identifikationsmerkmal an die anfordernde Stelle übermittelt. Die erfindungsgemäße Chipkarte zur Identifikation einer Person gegenüber einer auffordernden Stelle, wobei auf der Chipkarte ein vor unberechtigtem Zugriff geschütztes Identifikationsmerkmal gespeichert ist, aus dem mit Hilfe einer Anwendung und einer Kennung eines Anwendungsbereiches der auffordernden Stelle ein anwendungsbereichsspezifisches Identifikationsmerkmal ableitbar ist, ist **dadurch gekennzeichnet, dass** die Chipkarte eine Betriebssystemerweiterung umfasst, um mit Hilfe einer kryptographischen Einwegfunktion aus dem Identifikationsmerkmal und der im Rahmen eines Kartenkommandos an die Chipkarte übertragenen Kennung des Anwendungsbereichs das anwendungsbereichsspezifische Identifikationsmerkmal zu errechnen. Die am Markt befindlichen Betriebssysteme für Chipkarten unterstützen eine derartige Operation standardmäßig nicht.

Das ldentifikationsmerkmal wird als eigenes EF (Elementary File) oder Teil eines bestehenden EFs im Rahmen des Personalisierungsprozesses oder auch zu einem späteren Zeitpunkt - beispielsweise im Rahmen eines Aktualisierungsprozesses - auf die Chipkarte geschrieben. Die Access Conditions sind dabei so gesetzt, dass ein Schreiben des ldentifikationsmerkmals nur nach expliziter Authentifizierung (z.B. mittels Secure Messaging) durch den Kartenausgeber bzw. dessen technischen Dienstleister möglich ist. Ein Lesen des Files ist nicht möglich bzw. gleich geschützt wie der Schreibvorgang.

Zur Ableitung des anwendungsbereichsspezifischen ldentifikationsmerkmals (in Österreich als bPK bzw. wbPK bezeichnet) stellt das Karten-Betriebssystem ein Kartenkommando gemäß folgender Spezifikation zur Verfügung:

| **Inhalt** | **Länge** **(in Byte)** | **Beschreibung** |
|---|---|---|
| CLA | 1 | 00 -> Class Byte |
| INS | 1 | XX -> Instruction Code |
| P1 | 1 | 00 -> P1 |
| P2 | 1 | 00 -> P2 |
| Lc | 1 | -> Länge des Anwendungsbereichs |
| Data | nn | XX 'XX... XX' Anwendungsbereich |

Der Instruction Code ist die Kennung des entsprechenden Kartenkommandos. Diese ist mit dem jeweiligen Hersteller des Kartenbetriebssystems zu definieren.

Die Antwortnachricht der Chipkarte ist folgendermaßen aufgebaut:

| **Inhalt** | **Länge** **(in Byte)** | **Beschreibung** |
|---|---|---|
| Data | nn | 'XX... XX' -> Ergebnis der Einwegfunktion (z.B.: SHA-1 / SHA-256 Hashwert, oder andere kryptographische Einwegfunktionen) |
| SW1 | 1 | Statusbyte 1 |
| SW2 | 1 | Statusbyte 2 |

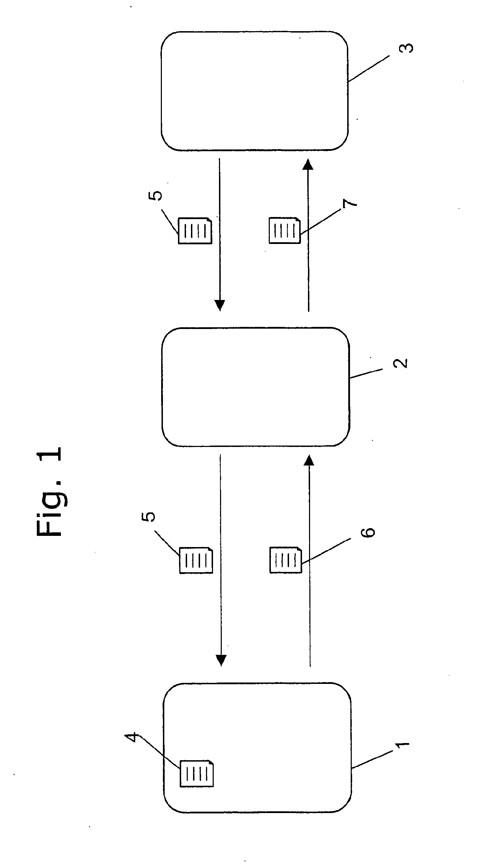

Ein konkretes Ausführungsbeispiel der Erfindung wird im folgenden anhand der Figur 1 beschrieben.

Figur 1 zeigt eine Chipkarte 1, welche ein Identifikationsmerkmal 4 enthält, sowie eine Anwendung 2 und eine anfordernde Stelle 3. Die Chipkarte 1 befindet sich in der Verfügungshoheit der natürlichen Person und das Identifikationsmerkmal 4 ist gegen unberechtigtes Auslesen gesichert. Die Anwendung 2 kommuniziert mit der Chipkarte auf der einen Seite und mit der anfordernden Stelle 3 auf der anderen Seite. Die anfordernde Stelle 3 kann eine Behörde oder ein privatwirtschaftlicher Auftraggeber sein.

Bei dem erfindungsgemäßen Verfahren stellt die anfordernde Stelle 3 der Anwendung 2 die Kennung des Anwendungsbereichs 5 zur Verfügung. Die Anwendung 2 sendet ein Kommando zur Ableitung des anwendungsbereichsspezifischen Identifikationsmerkmals an die Chipkarte 1 und übergibt dieser die Kennung des Anwendungsbereichs 5. Die konkrete Ableitung des anwendungsbereichsspezifischen Identifikationsmerkmals findet nun innerhalb der Chipkarte 1 statt. Dabei wird das Identifikationsmerkmal 4 mit der Kennung des Anwendungsbereichs 5 verknüpft und auf die entstehende Zeichenkette wird eine kryptographische Einwegfunktion angewandt. Bei dieser Einwegfunktion kann es sich um einen Hash-Algorithmus handeln. Das Ergebnis dieser Einwegfunktion ist das Kryptogramm 6, welches von der Chipkarte 1 an die Anwendung 2 übermittelt wird. Die Anwendung 2 nimmt gegebenenfalls noch eine Aufbereitung der Daten vor und übermittelt diese als Datenpaket 7 schließlich an die anfordernde Stelle 3.

Durch dieses Verfahren wird eine Übermittlung der Stammzahl an die anfordernde Stelle 3 oder eine Bürgerkartenumgebung vermieden. Weder die Behörde noch der privatwirtschaftliche Auftraggeber kann aus dem übermittelten Datenpaket 7 auf die Stammzahl schließen.

### Bezugszeichenliste

- 1: Chipkarte
- 2: Anwendung
- 3: Anfordernde Stelle
- 4: Identifikationsmerkmal
- 5: Kennung des Anwendungsbereichs
- 6: Kryptogramm
- 7: Datenpaket

## Patentansprüche

1. Verfahren zur Erzeugung eines anwendungsbereichsspezifischen Identifikationsmerkmals zur Identifikation einer Person gegenüber einer auffordernden Stelle (3) aus einem auf einer Chipkarte (1) gespeicherten und vor unberechtigtem Zugriff geschützten Identifikationsmerkmal (4) mit Hilfe einer Anwendung (2) und einer Kennung eines Anwendungsbereiches (5) der auffordernden Stelle (3), **dadurch gekennzeichnet, dass**
a. die anfordernde Stelle (3) der Anwendung (2) die Kennung des Anwendungsbereichs (5) zur Verfügung stellt,
b. die Anwendung (2) der Chipkarte (1) ein Kommando zur Ableitung des anwendungsbereichsspezifischen Identifikationsmerkmals und die Kennung des Anwendungsbereichs (5) übermittelt,
c. in der Chipkarte (1) die Ableitung des anwendungsbereichsspezifischen Identifikationsmerkmals durchgeführt wird, indem das Identifikationsmerkmal (4) mit der Kennung des Anwendungsbereichs (5) verknüpft und darauf eine kryptographische Einwegfunktion angewandt wird,
d. das resultierende Kryptogramm (6) an die Anwendung (2) übertragen wird,
e. die Anwendung (2) das Kryptogramm (6) direkt oder nach Aufbereitung als Datenpaket (7) als anwendungsbereichsspezifisches Identifikationsmerkmal an die anfordernde Stelle (3) übermittelt.

2. Verfahren nach Anspruch 1, **dadurch gekennzeichnet, dass** es sich bei dem Identifikationsmerkmal (4) um die Stammzahl einer natürlichen Person handelt.

3. Verfahren nach Anspruch 1 oder 2, **dadurch gekennzeichnet, dass** es sich bei der anfordernden Stelle (3) um eine Behörde, bei der Kennung des Anwendungsbereichs (5) um den betreffenden Verfahrensbereich, und beim anwendungsbereichsspezifischen Identifikationsmerkmal um ein bereichsspezifisches Personenkennzeichen (bPK) handelt.

4. Verfahren nach Anspruch 1 oder 2, **dadurch gekennzeichnet, dass** es sich bei der anfordernden Stelle (3) um einen Auftraggeber aus dem privaten Bereich, bei der Kennung des Anwendungsbereichs (5) um dessen Stammzahl oder Firmenbuchnummer, und beim anwendungsbereichsspezifischen Identifikationsmerkmal um ein wirtschaftsbereichsspezifisches Personenkennzeichen (wbPK) handelt.

5. Chipkarte (1) zur Identifikation einer Person gegenüber einer auffordernden Stelle (3), wobei auf der Chipkarte (1) ein vor unberechtigtem Zugriff geschütztes Identifikationsmerkmal (4) gespeichert ist, aus dem mit Hilfe einer Anwendung (2) und einer Kennung eines Anwendungsbereiches (5) der auffordernden Stelle (3) ein anwendungsbereichsspezifisches Identifikationsmerkmal ableitbar ist, **dadurch gekennzeichnet, dass** die Chipkarte (1) eine Betriebssystemerweiterung umfasst, um mit Hilfe einer kryptographischen Einwegfunktion aus dem Identifikationsmerkmal (4) und der im Rahmen eines Kartenkommandos an die Chipkarte (1) übertragenen Kennung des Anwendungsbereichs (5) das anwendungsbereichsspezifisches Identifikationsmerkmal zu errechnen.

6. Chipkarte (1) nach Anspruch 5, **dadurch gekennzeichnet, dass** es sich bei dem Identifikationsmerkmal (4) um die Stammzahl einer natürlichen Person handelt.

7. Chipkarte (1) nach Anspruch 5 oder 6, **dadurch gekennzeichnet, dass** es sich bei der anfordernden Stelle (3) um eine Behörde, bei der Kennung des Anwendungsbereichs (5) um den betreffenden Verfahrensbereich, und beim anwendungsbereichsspezifischen Identifikationsmerkmal um ein bereiclisspezifisches Personenkennzeichen (bPK) handelt.

8. Chipkarte (1) nach Anspruch 5 oder 6, **dadurch gekennzeichnet, dass** es sich
bei der anfordernden Stelle (3) um einen Auftraggeber aus dem privaten Bereich, bei der Kennung des Anwendungsbereichs (5) um dessen Stammzahl oder Firmenbuchnummer, und beim anwendungsbereichsspezifischen Identifikationsmerkmal um ein wirtschaftsbereichsspezifisches Personenkennzeichen (wbPK) handelt.
